# EUROPÄISCHE PATENTSCHRIFT

(11) **EP 3 372 343 B1**
(45) Veröffentlichungstag und Bekanntmachung des Hinweises auf die Patenterteilung: **04.05.2022**
(21) Anmeldenummer: 18159366.6
(22) Anmeldetag: 01.03.2018
(51) Int. Cl.: B25B 23/00

(54) **ANORDNUNG AUS EINEM REAKTIONSMOMENTE ABLEITENDEN STÜTZARM UND EINEM DREHSCHRAUBER**
ASSEMBLY CONSISTING OF A TORQUE-DISCHARGING SUPPORT ARM AND A SCREWDRIVER
DISPOSITIF COMPORTANT UN BRAS DE SUPPORT DÉVIANT LE MOMENT DE RÉACTION ET UN TOURNEVIS

(30) Priorität: 09.03.2017 DE 102017105025
(43) Veröffentlichungstag der Anmeldung: 12.09.2018
(73) Patentinhaber: Hohmann, Frank, 59581 Warstein (DE); Hohmann, Jörg, 59872 Meschede (DE)
(72) Erfinder:
(74) Vertreter: Janke Scholl Patentanwälte PartG mbB

(56) Entgegenhaltungen:
- EP-A2- 1 329 293
- EP-A2- 2 210 709
- DE-U1- 20 301 759
- DE-U1-202013 004 157
- US-A- 4 794 825

## Beschreibung

Die Erfindung betrifft eine Anordnung aus einem Reaktionsmomente ableitenden Stützarm und einem Drehschrauber, welcher ein Antriebsteil und ein Getriebegehäuse mit einer nach vorne aus dem Getriebegehäuse herausgeführten Ausgangswelle aufweist, wobei die Antriebswelle koaxial innerhalb des Getriebegehäuses angeordnet ist, wobei das Getriebegehäuse mit einer äußeren und umlaufenden Keilverzahnung versehen ist, deren Zähne sich nach hinten bis an eine das Getriebegehäuse über dessen Umfang umgebende Nut erstrecken, deren Nutgrund auf einem Durchmesser liegt, der kleiner ist als der von den Spitzen der Zähne beschriebene Durchmesser, wobei der Stützarm einen Befestigungsabschnitt mit einem ringförmigen Befestigungsflansch und einer inneren Keilverzahnung, sowie einen seitlich versetzt zu der Ausgangswelle angeordneten, gegen ein externes Widerlager anlegbaren Stützfuß aufweist, wobei die Keilverzahnung des Befestigungsflansches mit der Keilverzahnung des Getriebegehäuses derart zusammenwirkt, dass der Stützarm drehfest zu dem Getriebegehäuse ist, wobei an dem Befestigungsflansch ein Arretierelement angeordnet ist, welches eine Sperr- oder eine Lösestellung einnehmen kann, und wobei der Stützarm in der Sperrstellung in Längsrichtung an dem Getriebegehäuse festgelegt ist.

Während eines Schraubvorgangs werden Drehschrauber in der Regel von einem Bediener über einen Handgriff gehalten. Das beim Schraubprozess entstehende, oft erhebliche Reaktionsmoment kann über einen drehfest an dem Drehschrauber befestigten Stützarm abgeleitet werden. Dazu muss der Stützarm an einem vorhandenen festen Bauteil, etwa einer benachbarten Verschraubung, anliegen bzw. sich daran abstützen. Die benachbarte Verschraubung dient dann als Widerlager. Dadurch wird eine Übertragung von Reaktionsmomenten auf den Bediener des Drehschraubers, z.B. über den Handgriff, vermieden. Oft sind die auftretenden Reaktionsmomente vorab schwer einzuschätzen und können zu einem unkalkulierbaren Risiko für den Bediener führen, und etwa ein Rückschlagen des Drehschraubers hervorrufen. Somit wird die Betriebssicherheit des Drehschraubers durch eine entsprechende Stützarm-Anordnung an dem Drehschrauber erhöht. Ferner ergibt sich daraus auch eine komfortablere Nutzung des Drehschraubers.

Zur Befestigung eines solchen Stützarmes an einem Drehschrauber ist aus der DE 10 2009 005 997 A1, der EP 2 210 709 A2 und in ähnlicher Ausgestaltung aus der DE 20 2013 004 157 U1 bekannt, dass der Stützarm einen ringförmigen Befestigungsflansch mit einer Innenverzahnung aufweist und auf ein die Ausgangswelle umgebendes Getriebegehäuse mit einer entsprechenden Außenverzahnung aufschiebbar ist. Dadurch ist der Stützarm drehfest gegenüber dem Getriebegehäuse.

Zur Fixierung des Stützarmes auch in Längsrichtung der Ausgangswelle ist z. B. in einem Zahn oder Zahngrund der Innenverzahnung ist bei der DE 10 2009 005 997 A1 und der EP 2 210 709 A2 eine radial verschieblich gelagerte Kugel angeordnet. Ein federvorgespannter Betätigungsstift nimmt die Kugel zumindest teilweise in einer Kulisse auf. Im betätigten Zustand des Betätigungsstifts verklemmt die Kugel gegen die Zahnflanken oder Zahnspitzen der Außenverzahnung, und verklemmt so das Getriebegehäuse axial gegenüber dem Stützarm.

Nachteilig dabei kann sein, dass die Befestigung in der Längsrichtung allein auf Klemm- bzw. Reibkräften beruht. Dadurch besteht die Gefahr, dass bei entsprechender Druck- oder Zugbelastung des Arms gegenüber dem Drehschrauber die Befestigungsstellung gelöst wird, und der Stützarm samt Befestigungsflansch vom Getriebegehäuse des Drehschraubers abrutscht. Auch kommt es bei einer solchen auf Klemm- und Reibkräften basierenden Befestigung zu einer erhöhten Materialabnutzung durch Materialabrieb.

Auch die US 4, 794,825 offenbart einen Drehschrauber mit einen Antriebsteil und einem in dessen Verlängerung angeordneten Getriebegehäuse, aus dem die Ausgangswelle des Drehschraubers austritt. Um das Antriebsteil herum ist eine Keilverzahnung ausgebildet, auf die sich ein mit einer entsprechenden Innenverzahnung versehener Stützarm in Längsrichtung aufschieben lässt. Zur Sicherung des Stützarms in Längsrichtung ist eine Madenschraube vorhanden, welche gegen eine zylindrische Fläche an dem Antriebsteil verklemmbar ist.

Der Erfindung liegt die Aufgabe zugrunde, eine Anordnung aus einem Reaktionsmomente ableitenden Stützarm und einem Drehschrauber bereitzustellen, die eine zuverlässige, sichere und abnutzungsarme Befestigung des Stützarmes an dem Drehschrauber ermöglicht.

Zur Lösung dieser Aufgabe wird eine Anordnung aus einem Reaktionsmomente ableitenden Stützarm und einem Drehschrauber mit den in Patentanspruch 1 angegebenen Merkmalen vorgeschlagen.

Die erfindungsgemäße Anordnung besteht zunächst aus einem Reaktionsmomente ableitenden Stützarm und einem Drehschrauber. Der Drehschrauber weist ein Antriebsteil und ein Getriebegehäuse mit einer nach vorne aus dem Getriebegehäuse herausgeführten Ausgangswelle auf. Ferner kann der Drehschrauber weitere Komponenten aufweisen. Zu diesen zählen ein Handgriff, im Fall eines elektrisch angetriebenen Drehschraubers ein Akkumodul, ferner Bedienelemente sowie visuelle und/oder akustische Anzeigen. Die Erfindung ist aber auch an einem pneumatisch angetriebenen Drehschrauber realisierbar. Um das Getriebegehäuse herum ist eine äußere Keilverzahnung angeordnet, deren Zähne sich nach hinten bis an eine das Getriebegehäuse über dessen gesamten Umfang umgebende Nut erstrecken, deren Nutgrund auf einem Durchmesser liegt, der kleiner ist als der Durchmesser, den die Zahnspitzen der äußeren Keilverzahnung beschreiben.

Der Stützarm weist einen Befestigungsabschnitt mit einem ringförmigen Befestigungsflansch und einer inneren Keilverzahnung, sowie einen gegen ein externes Widerlager anlegbaren Stützabschnitt mit einem Stützfuß auf, der seitlich versetzt zu der Ausgangswelle angeordnet ist. Die innere Keilverzahnung an dem Befestigungsflansch wirkt mit der äußeren Keilverzahnung an dem Getriebegehäuse derart zusammen, dass der Stützarm drehfest zu dem Getriebegehäuse ist.

An dem Befestigungsflansch ist ein Arretierelement angeordnet, welches eine Sperr- oder eine Lösestellung einnehmen kann. Der Stützarm ist in der Sperrstellung in Längsrichtung an dem Getriebegehäuse festgelegt. In der Sperrstellung erstreckt sich das Arretierelement zumindest teilweise in die Nut hinein und verriegelt so den Stützarm in Längsrichtung an dem Getriebegehäuse, und zwar in einer definierten Längsposition.

Mit der Erfindung wird eine bei Drehschraubern oft ohnehin an dem Getriebegehäuse vorhandene Nut genutzt, um den Stützarm in einer eindeutigen Längsposition zu arretieren. Die Befestigung beruht somit im Gegensatz zur Lösung aus der DE 10 2009 005 997 A1 nicht auf einem nur kraftschlüssigen Verklemmen und zeigt auch bei dauerhaftem Einsatz eine geringe Abnutzung. Vorstellbar ist es auch, mehrere solcher Fixiervorrichtungen umfänglich des Befestigungsflansches anzuordnen, beispielsweise um die formschlüssige Arretierung nochmals zu verbessern.

Gemäß einer bevorzugten Ausgestaltung der Erfindung ist das Arretierelement Bestandteil einer außerdem ein Betätigungselement umfassenden Fixiervorrichtung, wobei das Betätigungselement ein innerhalb des Befestigungsflansches tangential verschiebbar angeordneter, gegen eine Druckfeder vorgespannter Stift, der eine Kulisse oder Ausnehmung zur teilweisen Aufnahme des Arretierelements in der Lösestellung aufweist. Durch die tangentiale Anordnung des Betätigungselements bzw. Stifts wird die Zugänglichkeit des Stifts bei Betätigung durch den Bediener erleichtert. Aus dem Stand der Technik ist eine axiale Anordnung eines solchen Stifts bekannt. Dies kann je nach Schraubsituation zu einer schwierigeren Zugänglichkeit des Stifts führen. Die Betätigung des Stifts kann auch in einer akuten Schraubsituation notwendig werden, beispielsweise zur Nachjustierung des Stützarmes. Insbesondere bei engen Platzverhältnissen ist es dann vorteilhaft, den Stift von der Seite betätigen zu können.

Nach einer weiteren Ausgestaltung der Erfindung ist vorteilhaft, dass sich das Betätigungselement aus dem in einer Bohrung des Befestigungsflansches geführten Stift sowie einem das Stiftende bildenden, erweiterten Kopf zusammensetzt. Durch die Zweiteiligkeit des Betätigungselements wird einerseits eine saubere Führung des Betätigungselements in der Bohrung gewährleistet, andererseits aber auch eine leichte Betätigbarkeit von außen. Der Stift und der Kopf können einstückig sein, oder beispielsweise miteinander verschraubt sein. So kann der Kopf eine Bohrung mit einem Innengewinde aufweisen, in welches der Stift mit einem Außengewinde eingeschraubt wird.

Vorteilhaft ist es zudem, wenn sich die Druckfeder einerseits an einem dem Kopf abgewandten Ende des Stifts und andererseits an einem die Bohrung nach außen abschließenden Stopfen abstützt. Die Abstützung der Druckfeder an einem Ende des Stifts ist für die erfindungsgemäße Anordnung zwingend notwendig. Nur so kann das Arretierelement in der Sperrstellung zumindest teilweise in die Nut eingreifen. Die Federkraft hält den Stift also selbstständig in der für die Sperrstellung der Fixiervorrichtung notwendigen Position. Die weitere Abstützung der Druckfeder an einem die Bohrung nach außen abschließenden Stopfen ist dahingehend vorteilhaft, dass bei Entfernung des Stopfens, sowohl die Druckfeder, als auch der Stift oder das Arretierelement in einfacher Weise aus der Bohrung entfernt und zum Beispiel ausgetauscht werden kann. Zusätzlich können weitere ausgehend von der Bohrung nach außen führende Kanäle oder Bohrungen vorgesehen sein, die ebenfalls mit Stopfen verschließbar sind.

Gemäß einer weiteren Ausgestaltung der Erfindung ist der Stopfen in der Bohrung verpresst oder durch Verschraubung befestigt. Dies ermöglicht ein einfaches und schnelles Entfernen des Stopfens bei Bedarf, beispielsweise wenn der Stift, das Arretierelement oder die Druckfeder zu Wartungszwecken aus der Bohrung entfernt und/oder ausgetauscht werden müssen. Selbstverständlich können auch weitere in dem Befestigungsflansch angeordnete Bohrungen, die in Verbindung zu der Führungsbohrung des Stifts stehen, mit Stopfen derart verschlossen werden, dass diese in der jeweiligen Bohrung verpresst oder verschraubt sind.

Weitere Einzelheiten und Vorteile der Erfindung ergeben sich aus der nachfolgenden Beschreibung der zugehörigen Zeichnungen, in denen ein Ausführungsbeispiel der erfindungsgemäßen Anordnung dargestellt ist. In den Zeichnungen zeigen:
- Fig. 1: eine schematische Darstellung einer Anordnung aus einem Drehschrauber und einem daran befestigten Stützarm;
- Fig. 2: eine schematische Darstellung des Getriebegehäuses des Drehschraubers samt daran befestigtem Sützarm;
- Fig. 3: eine vergrößerte Seitenansichtansicht des Befestigungsbereiches zwischen Stützarm und Getriebegehäuse;
- Fig. 4: eine vergrößerte Detailansicht der Einzelheit IV aus Fig. 3;
- Fig. 5: ein Querschnitt durch den Befestigungsflansch gemäß Blickrichtung V-V in Fig. 3.

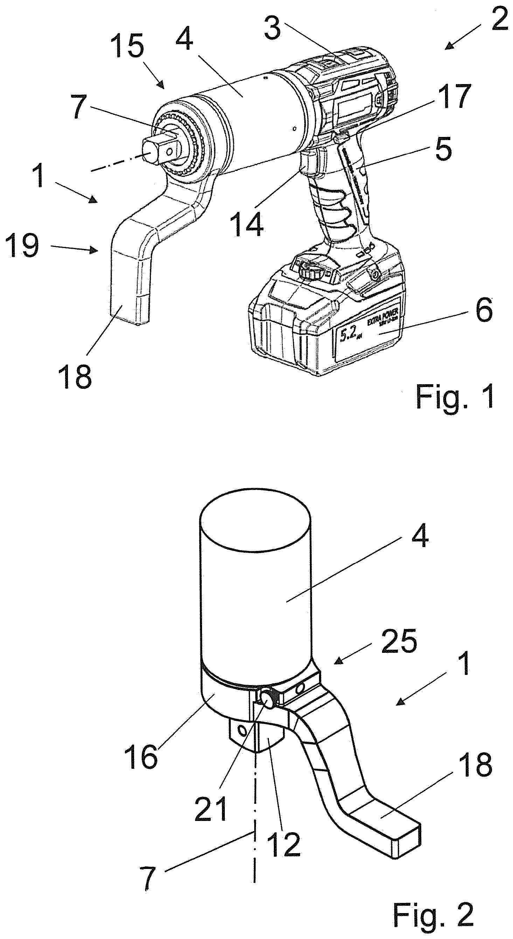

Bestandteile der erfindungsgemäßen Anordnung sind ein Drehschrauber 2 und ein die Verschraubungsmomente aufnehmender Stützarm 1. Die Fig. 1 zeigt einen entsprechenden Drehschrauber 2 mit einem daran befestigten Stützarm 1. Der Drehschrauber 2 setzt sich zunächst aus einem Antriebsteil 3 und einem Getriebegehäuse 4 zusammen. Beide Komponenten können auch z.B. über ein Drehgelenk miteinander verbunden sein.

In dem Antriebsteil 3 kann eine motorische Einrichtung zum Betrieb des Drehschraubers 2 vorgesehen sein. Auch eine pneumatische oder elektrische Betriebsweise kann prinzipiell in Betracht kommen. Zudem kann in Nähe zu dem Antriebsteil 3 ein Handgriff 5 und ein Akku 6 bzw. eine Batterie vorgesehen sein. Ein solcher Akku 6 kann austauschbar an dem Drehschrauber 2 befestigt sein. Der Akku 6 stellt die benötigte elektrische Energie zum Betrieb des Drehschraubers 2 zur Verfügung. Selbstverständlich kann ein solcher Drehschrauber 2 auch über eine entsprechende Kabelverbindung mit elektrischer Energie versorgt werden. Innerhalb des Getriebegehäuses 4 können für den Betrieb des Drehschraubers 2 notwendige Getriebebestandteile, z.B. ein Drehmomentwandler und ein Getriebe angeordnet sein.

Ein wesentlicher Bestandteil ist ferner eine nach vorne aus dem Getriebegehäuse 4 herausführende Ausgangswelle 7. Diese schließt an ihrem vorderen Ende mit einem Mehrkant 12 zur austauschbaren Befestigung eines Werkzeugs ab.

Zum Betrieb des Drehschraubers 2 hält der Bediener den Drehschrauber 2 über den Handgriff 5 in seiner Hand. Die Aktivierung des Drehschraubers 2 bzw. die Steuerung des Schraubvorgangs findet in erster Linie durch Betätigung eines entsprechenden Schalters 14 statt. Über einen zusätzlichen Schalter 17 kann die Drehrichtung der Ausgangswelle 7 umgeschaltet werden.

Wie ebenfalls aus Fig. 1 ersichtlich ist, kann an dem Drehschrauber 2 bzw. am vorderen Ende des Getriebegehäuses 4 der Stützarm 1 befestigt werden. Im Wesentlichen ist der Stützarm 1 seitlich versetzt zu der Drehachse der Ausgangswelle 7 angeordnet. Der Stützarm 1 weist einen als ringförmiger Befestigungsflansch 16 ausgebildeten Befestigungsabschnitt 15 sowie einen Stützabschnitt 19 mit einem Stützfuß 18 auf, der gegen ein externes Widerlager anlegbar ist. Das externe Widerlager kann durch vorhandene Maschinen- oder Bauteile gebildet werden, beispielsweise die Mutter einer benachbarten Verschraubung.

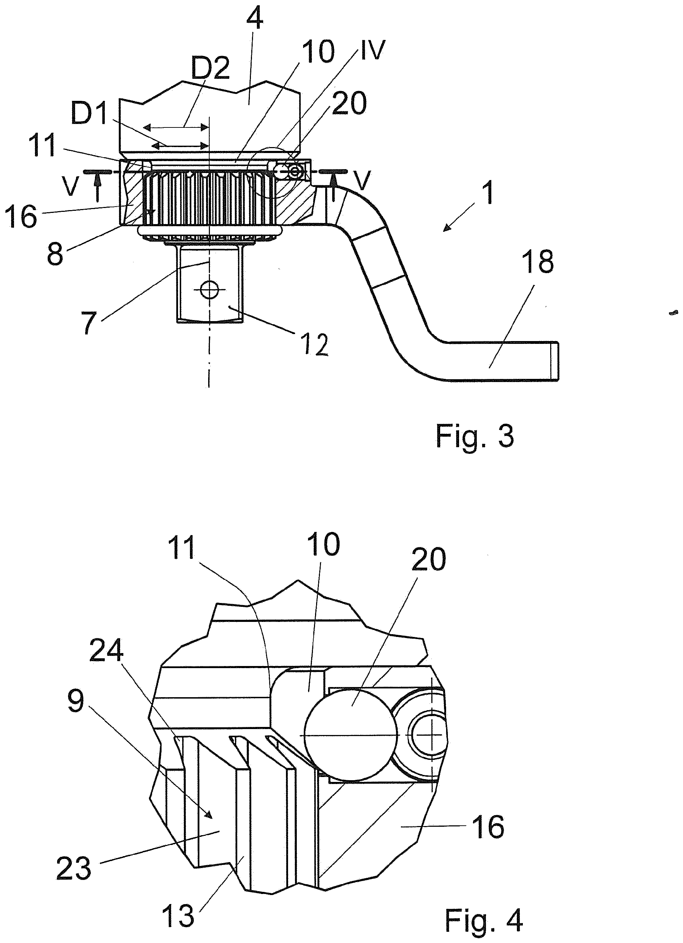

Wie insbesondere in den Figuren 2 und 3 zu erkennen, ist an dem Befestigungsflansch 16 eine ein Arretierelement 20 und ein Betätigungselement 21 umfassende Fixiervorrichtung 25 angeordnet. Das Betätigungselement 21 ist stiftförmig und ist in dem Befestigungsflansch 16 tangential zur Drehachse 7 der Ausgangswelle verschiebbar angeordnet. Eine Verschiebung des Betätigungselements 21 kann durch Druck auf einen radial erweiterten Kopf 37 des das Betätigungselement 21 bildenden Stifts 31 erzeugt werden.

Das Betätigungselement 21 ist vorzugsweise zweiteilig ausgebildet, und besteht dann aus dem in einer Bohrung 36 des Befestigungsflansches 16 geführten Stift 31 sowie dem das Stiftende bildenden, erweiterten Kopf 37. Der Kopf 37 ist außerhalb der Bohrung 36, und auf diese Weise von Hand greifbar.

Aus Figur 3 und Figur 4 geht hervor, dass um das Getriebegehäuse 4 herum eine äußere Keilverzahnung 8 angeordnet ist, deren zueinander parallele und jeweils gleiche Umfangsabstände aufweisenden Zähne 9 sich nach hinten, also in Richtung zu dem Antriebsteil 3, nur bis an eine das Getriebegehäuse 4 über dessen gesamten Umfang umgebende Nut 10 erstrecken. Der Nutgrund 11 der Nut 10 liegt auf einem Durchmesser D1, der kleiner ist als der von den Spitzen 13 der Zähne 9 beschriebene Durchmesser D2.

Die Keilverzahnung 8 ist eine umfänglich um das Getriebegehäuse 4 herum angeordnete Folge von Zähnen 9, die sich alle in Längsrichtung erstrecken. Die einzelnen Zähne 9 werden jeweils von Zahnflanken 23 und einer Zahnspitze 13 gebildet. Die Zähne 9 sind durch Zwischenräume und Zahngründe 24 getrennt und weisen gleiche Abstände zueinander auf.

Korrespondierend ist eine innere Keilverzahnung an dem ringförmigen Befestigungsflansch 16 angeordnet. Diese wirkt mit der Keilverzahnung 8 an dem Getriebegehäuse 4 derart zusammen, dass der Stützarm 1 drehfest zu dem Getriebegehäuse 4 ist. Konkret bedeutet dies, dass die Zähne der inneren Keilverzahnung des Befestigungsflansches 16 in die zwischen den einzelnen Zahnflanken 23 der Zähne 9 der Keilverzahnung 8 des Getriebegehäuses 4 befindlichen Zahnzwischenräume eingreifen, und umgekehrt.

Die Fixiervorrichtung 25 kann eine Sperr- oder eine Lösestellung einnehmen, wobei der Stützarm 1 in der Sperrstellung in Längsrichtung der Drehachse bzw. Ausgangswelle 7 an dem Getriebegehäuse 4 festgelegt ist. Dazu erstreckt sich das Arretierelement 20, vorzugsweise eine Kugel, in der Sperrstellung der Fixiervorrichtung 25 teilweise in die Nut 10 hinein (Fig. 4). Teilweise verbleibt das Arretierelement 20, auch in der Sperrstellung, in dem Befestigungsflansch 16.

Um von der Sperrstellung in eine Lösestellung der Fixiervorrichtung 25 zu gelangen, welche ein Herunterziehen des Stützarmes 1 bzw. Befestigungsflansches 16 von dem Getriebegehäuse 4 ermöglicht, muss das Betätigungselement 21 durch den Bediener betätigt werden.

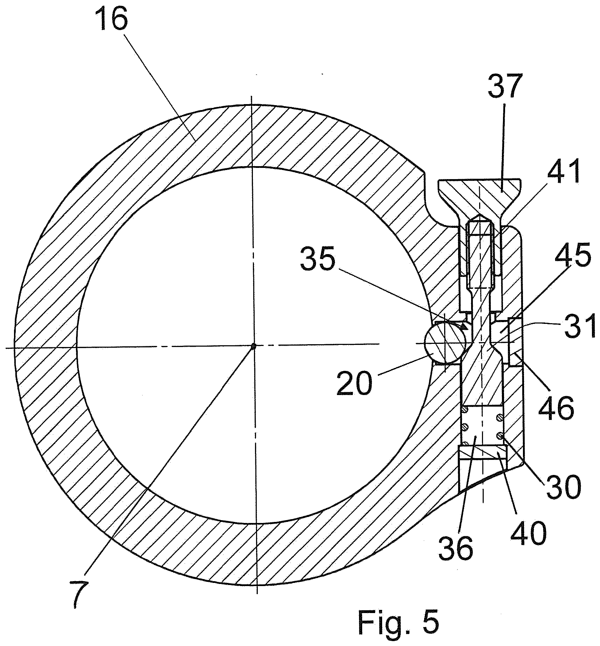

Wie insbesondere in Fig. 5 dargestellt, ist das Betätigungselement 21 der innerhalb des Befestigungsflansches 16 tangential zur Drehachse 7 des Drehschraubers verschiebbar angeordnete Stift 31, der gegen eine Druckfeder 30 vorgespannt ist. Der Stift 31 weist eine Kulisse oder eine Ausnehmung 35 auf, in die die Kugel 20 mit einem Teil ihres Kugelvolumens ragt.

Vorzugsweise setzt sich das Betätigungselement 21 aus dem in der Bohrung 36 des Befestigungsflansches 16 geführten Stift 31 sowie dem das Stiftende bildenden, erweiterten Kopf 37 zusammen. Stift 31 und Kopf 37 sind vorzugsweise zweiteilig, können aber auch einteilig bzw. einstückig ausgebildet sein. Der Kopf 37 ist im Vergleich zum Stift 31 erweitert, beispielsweise radial erweitert. Der radial erweiterte Teil des Kopfes 37 liegt außerhalb der Bohrung 36 des Befestigungsflansches 16 und kann so von dem Bediener betätigt werden.

Wie Figur 5 zeigt, kann der Kopf 37 in einer Bohrung 41 des Kopfes 37 den Stift 31 aufnehmen, zum Beispiel durch eine Schraubverbindung. Somit stehen Stift 31 mit Kopf 37 in Wirkverbindung. Bei Betätigung des Betätigungselements 21, also des Kopfes 37, wird der Stift 31 entgegen der Kraft einer Feder 30 in die Bohrung 36 hineingedrückt. An dem dem Kopf 37 des Stifts 31 abgewandten Ende des Stifts 31 stützt sich eine Druckfeder 30 ab, die zu ihrer anderen Seite an einem die Bohrung 36 nach außen verschließenden Stopfen 40 abgestützt ist. Der Stopfen 40 kann in der Bohrung 36 verpresst oder durch Verschraubung befestigt sein. Bei Verschraubung weist der Stopfen 40 ein entsprechendes Außengewinde und die Bohrung 36 ein dazu korrespondierendes Innengewinde auf.

Es können zusätzlich auch weitere Öffnungen an dem Befestigungsflansch 16 vorgesehen sein, die einen Zugang von außen zur Bohrung 36 ermöglichen. So kann beispielsweise eine entsprechende Öffnung 45 seitlich des Stifts 31 in dem Befestigungsflansch 16 angeordnet sein. Auch diese Bohrung 36 kann mit einem Stopfen 46 verschlossen werden. Werden die Stopfen 40, 46 entfernt, so können die innerhalb der Bohrung 36 bzw. im Befestigungsflansch 16 angeordneten Bauteile, insbesondere die Druckfeder 30, das Betätigungselement 21 und das Arretierelement 20 aus der Bohrung 36 bzw. dem Flansch 16 entfernt und ausgetauscht werden. Insbesondere für Wartungszwecke ist dies vorteilhaft.

In Fig. 5 ist der Befestigungsflansch 16 samt Fixiervorrichtung 25 in der Schnittebene V-V gem. Fig. 3 dargestellt. Die zu berücksichtigende Blickrichtung ist durch entsprechende Pfeile in Fig. 3 gekennzeichnet.

Bei Fig. 5 befindet sich die Fixiervorrichtung 25 in ihrer Sperrstellung. Wird das Betätigungselement 21 betätigt, verschiebt sich der Kopf 37 samt Stift 31 in Richtung zu der Druckfeder 30. Die Druckfeder 30 wird komprimiert bzw. gestaucht und das Arretierelement 20 bzw. die Kugel kann in die Kulisse oder Ausnehmung 35 am Stift 31 ausweichen, und zwar radial in Bezug auf die Drehachse 7. Dadurch gelangt das Arretierelement 20 in seine Lösestellung. In dieser erstreckt sich das Arretierelement 20 im Gegensatz zur Sperrstellung nicht mehr in die Nut 10 hinein, und der Stützarm 1 kann in Längsrichtung der Ausgangswelle 7 von dem Drehschrauber 2 abgezogen werden.

In der Sperrstellung ist diese Bewegung nicht möglich, da das Arretierelement 20 bzw. die Kugel durch ihr teilweises Hineinragen in die Nut 10 die hinteren Zahnenden übergreift und den Stützarm 1 gegenüber dem Getriebegehäuse 4 bzw. dem Drehschrauber 2 in einer eindeutigen Längsposition arretiert, und zwar mittels Formschluss.

Das Arretierelement 20 und das Betätigungselement 21 können aus demselben Material oder aus unterschiedlichen Materialien gefertigt sein. Insbesondere können das Arretierelement 20 und das Betätigungselement 21 aus Metall gefertigt sein.

### Bezugszeichenliste

- 1: Stützarm
- 2: Drehschrauber
- 3: Antriebsteil
- 4: Getriebegehäuse
- 5: Handgriff
- 6: Akku
- 7: Ausgangswelle, Drehachse
- 8: äußere Keilverzahnung
- 9: Zahn
- 10: Nut
- 11: Nutgrund
- 12: Mehrkant
- 13: Spitze
- 14: Schalter
- 15: Befestigungsabschnitt
- 16: Befestigungsflansch
- 17: Schalter
- 18: Stützfuß
- 19: Stützabschnitt
- 20: Arretierelement, Kugel
- 21: Betätigungselement
- 23: Zahnflanke
- 24: Zahngrund
- 25: Fixiervorrichtung
- 30: Druckfeder
- 31: Stift
- 35: Ausnehmung
- 36: Bohrung
- 37: Kopf
- 40: Stopfen
- 41: Bohrung
- 45: Öffnung
- 46: Stopfen
- D1: Durchmesser
- D2: Durchmesser

## Patentansprüche

1. Anordnung aus einem Reaktionsmomente ableitenden Stützarm (1) und einem Drehschrauber (2), welcher ein Antriebsteil (3) und ein Getriebegehäuse (4) mit einer nach vorne aus dem Getriebegehäuse (4) herausgeführten Ausgangswelle (7) aufweist, wobei die Ausgangswelle (7) koaxial innerhalb des Getriebegehäuses (4) angeordnet ist, wobei das Getriebegehäuse (4) mit einer äußeren und umlaufenden Keilverzahnung (8) versehen ist, deren Zähne (9) sich nach hinten bis an eine das Getriebegehäuse (4) über dessen Umfang umgebende Nut (10) erstrecken, deren Nutgrund (11) auf einem Durchmesser (D1) liegt, der kleiner ist als der von den Spitzen (13) der Zähne (9) beschriebene Durchmesser (D2), wobei der Stützarm (1) einen Befestigungsabschnitt (15) mit einem ringförmigen Befestigungsflansch (16) und einer inneren Keilverzahnung, sowie einen seitlich versetzt zu der Ausgangswelle (7) angeordneten, gegen ein externes Widerlager anlegbaren Stützfuß (18) aufweist, wobei die Keilverzahnung des Befestigungsflansches (16) mit der Keilverzahnung (8) des Getriebegehäuses (4) derart zusammenwirkt, dass der Stützarm (1) drehfest zu dem Getriebegehäuse (4) ist, wobei an dem Befestigungsflansch (16) ein Arretierelement (20) angeordnet ist, welches eine Sperr- oder eine Lösestellung einnehmen kann, und wobei der Stützarm (1) in der Sperrstellung in Längsrichtung an dem Getriebegehäuse (4) festgelegt ist, **dadurch gekennzeichnet, dass** sich das Arretierelement (20) in der Sperrstellung teilweise oder ganz in die Nut (10) hinein erstreckt und so den Stützarm (1) in Längsrichtung an dem Getriebegehäuse (4) verriegelt.

2. Anordnung nach Anspruch 1, **dadurch gekennzeichnet, dass** das Arretierelement (20) Bestandteil einer außerdem ein Betätigungselement (21) umfassenden Fixiervorrichtung (25) ist, wobei das Betätigungselement (21) ein innerhalb des Befestigungsflansches (16) tangential verschiebbar angeordneter, gegen eine Druckfeder (30) vorgespannter Stift (31) ist, der eine Kulisse oder Ausnehmung (35) zur teilweisen Aufnahme des Arretierelements (20) in der Lösestellung aufweist.

3. Anordnung nach Anspruch 2, **dadurch gekennzeichnet, dass** sich das Betätigungselement (21) aus dem in einer Bohrung (36) des Befestigungsflansches (16) geführten Stift (31) sowie einem das Stiftende bildenden, erweiterten Kopf (37) zusammensetzt.

4. Anordnung nach Anspruch 3, **dadurch gekennzeichnet, dass** sich die Druckfeder (30) einerseits an einem dem Kopf (37) abgewandten Ende des Stifts (31) und andererseits an einem die Bohrung (36) nach außen abschließenden Stopfen (40) abstützt.

5. Anordnung nach Anspruch 4, **dadurch gekennzeichnet, dass** der Stopfen (40) in der Bohrung (36) verpresst oder durch Verschraubung befestigt ist.

## Claims

1. Assembly comprising a support arm (1), which diverts reaction torques, and a power screwdriver (2), which has a drive part (3) and a transmission housing (4) having an output shaft (7) which is guided forwards out of the transmission housing (4), wherein the output shaft (7) is arranged coaxially within the transmission housing (4), wherein the transmission housing (4) is provided with an external and circumferential spline (8), the teeth (9) of which extend rearwards up to a groove (10) surrounding the transmission housing (4) over the circumference thereof, the groove base (11) of said groove lying on a diameter (D1) which is smaller than the diameter (D2) described by the tips (13) of the teeth (9), wherein the support arm (1) has a fastening portion (15) having an annular fastening flange (16) and an internal spline, and also a support foot (18) which is arranged laterally offset from the output shaft (7) and which can be placed against an external abutment, wherein the spline of the fastening flange (16) cooperates with the spline (8) of the transmission housing (4) such that the support arm (1) is rotationally fixed relative to the transmission housing (4), wherein a locking element (20) is arranged on the fastening flange (16), said locking element being able to assume a blocking or a release position, and wherein, in the blocking position, the support arm (1) is fixed in the longitudinal direction to the transmission housing (4), **characterized in that**, in the blocking position, the locking element (20) extends partially or entirely into the groove (10) and thus locks the support arm (1) in the longitudinal direction to the transmission housing (4).

2. Assembly according to Claim 1, **characterized in that** the locking element (20) is a component part of a fixing apparatus (25) which further comprises an actuating element (21), wherein the actuating element (21) is a pin (31) which is arranged in a tangentially displaceable manner within the fastening flange (16) and which is preloaded against a compression spring (30) and which has a guideway or recess (35) for the partial reception of the locking element (20) in the release position.

3. Assembly according to Claim 2, **characterized in that** the actuating element (21) is composed of the pin (31), which is guided in a bore (36) of the fastening flange (16), and a widened head (37), which forms the pin end.

4. Assembly according to Claim 3, **characterized in that** the compression spring (30) is supported, on the one hand, against an end of the pin (31) facing away from the head (37), and, on the other hand, against a stopper (40) which closes off the bore (36) to the outside.

5. Assembly according to Claim 4, **characterized in that** the stopper (40) is pressed in the bore (36) or fastened therein by screwing.

## Revendications

1. Dispositif composé d'un bras de support (1) déviant des moments de réaction et d'un tournevis (2) comportant une partie d'entraînement (3) et un carter de transmission (4) avec un arbre de sortie (7) réalisé de façon à sortir vers l'avant hors du carter de transmission (4), l'arbre de sortie (7) étant disposé dans le plan coaxial à l'intérieur du carter de transmission (4), le carter de transmission (4) étant pourvu d'un endentement en clavette (8) extérieur et périphérique dont les dents (9) s'étendent vers l'arrière jusqu'à une rainure (10) entourant le carter de transmission (4) sur l'ensemble de sa circonférence, dont la base de rainure (11) se situe sur un diamètre (D1) inférieur au diamètre (D2) décrit des pointes (13) des dents (9), le bras de support (1) comportant une section de fixation (15) avec une bride de fixation (16) en forme de bague et un endentement en clavette intérieur ainsi qu'un pied de soutien (18) disposé de façon décalée en côté par rapport à l'arbre de sortie (7) et pouvant être placé contre un contre-palier externe, l'endentement en clavette de la bride de fixation (16) interagissant de telle sorte avec l'endentement en clavette (8) du carter de transmission (4) que le bras de support (1) est solidaire en rotation par rapport au carter de transmission (4), un élément d'arrêt (20) disposé au niveau de la bride de fixation (16) pouvant adopter une position de blocage ou de libération et le bras de support (1) étant fixé dans la position de blocage dans la direction longitudinale au niveau du carter de transmission (4), **caractérisé en ce que** l'élément d'arrêt (20) s'étend totalement ou en partie dans la position de blocage dans la rainure (10) et verrouille ainsi le bras de support (1) dans la direction longitudinale au niveau du carter de transmission (4).

2. Dispositif selon la revendication 1, **caractérisé en ce que** l'élément d'arrêt (20) fait partie d'un dispositif de fixation (25) comprenant entre autres un élément d'actionnement (21), l'élément d'actionnement (21) étant une tige (31) précontrainte contre un ressort de pression (30) et disposée de façon à pouvoir coulisser tangentiellement à l'intérieur de la bride de fixation (16), ladite tige comportant une coulisse ou un évidement (35) destiné à loger en partie l'élément d'arrêt (20) dans la position de libération.

3. Dispositif selon la revendication 2, **caractérisé en ce que** l'élément d'actionnement (21) se compose de la tige (31) guidée dans un alésage (36) de la bride de fixation (16) et d'une tête (37) élargie formant l'extrémité de la tige.

4. Dispositif selon la revendication 3, **caractérisé en ce que** le ressort de pression (30) appuie d'une part contre une extrémité de la tige (31) opposée à la tête (37) et d'autre part contre un bouchon (40) bouchant l'alésage (36) l'alésage par rapport à l'extérieur.

5. Dispositif selon la revendication 4, **caractérisé en ce que** le bouchon (40) est comprimé dans l'alésage (36) ou fixé par vissage.
